(19)

Europäisches
Patentamt
European
Patent Office
Office européen
des brevets

(11)  **EP 2 833 594 A1**

(12)  **EUROPEAN PATENT APPLICATION**

(43) Date of publication:
04.02.2015 Bulletin 2015/06

(51) Int Cl.:
*H04L 29/06* (2006.01)

(21) Application number: 13178653.5

(22) Date of filing: 31.07.2013

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**

(71) Applicant: **Siemens Aktiengesellschaft**
**80333 München (DE)**

(72) Inventors:
• **Athmanathan, Balakrishnan**
**560021 Bangalore (IN)**
• **Kamthania, Supriya**
**560037 Bangalore (IN)**

(54)  **Feature based three stage neural networks intrusion detection method and system**

(57)     A system and method for detecting a network intrusion is provided. The system comprises a first neural network (104) for determining a first plurality of weight values corresponding to a plurality of vectors of an input data. The system also includes a second neural network (106) for updating the first plurality of weight values received from the first neural network (104) to a second plurality of weight values based on the plurality of vectors of the input data. The system also has a third neural net-work (108) for updating the second plurality of weight values received from the second neural network (106) to a third plurality of weight values based on the plurality of vectors of the input data. The disclosed system further includes a classification module (110) for classifying the plurality of vectors under at least one of a plurality of intrusions based on the third plurality of weight values received from the third neural network (108).

FIG 1

~100

EP 2 833 594 A1

**Description**

The present invention relates to a method and system for intrusion detection and more particularly, to a method and system for feature based three stage neural networks intrusion detection.

In the present world, most of the organisations have local area networks (LANs) for intra-organisation communication. Organisation's servers are connected with these LANs and all organisation related data is being transferred over these networks. To communicate with vendors, customers and other organisations these LANs are connected to wide area network (WAN) such as the Internet. Such connections with WANs make the LANs vulnerable to intrusions. The intrusions pose a serious security risk to the organisation internal data. Damages caused by the intrusions are unauthorized modifications of the system files, user files or any other information related to the organisation. The intrusions can cost companies a huge amount of money and time. Hence it becomes very important to detect and prevent the intrusions before they cause any damage to the network.

There are various intrusion detection methods and systems known in the state of the art. The intrusion detection by definition is a task of detecting, preventing and possibly reacting to the intrusions on a system running over a network. Most of the intrusion detection techniques known in state of the art are based on misuse detection. Misuse detection is a process of attempting to identify instances of intrusions by comparing current activity against the expected actions of an intruder. Misuse detection is primarily done using some forms of pattern matching. One of the largest challenge for the misuse intrusion detection is, to able to generalize from a previously observed behaviour i.e. normal or malicious to recognize similar kind of future behaviour. Anomaly detection is an answer to this challenge.

Anomaly based intrusion detection systems observes activities that deviate significantly from established normal usage profiles over a network as anomalies that are possibly intrusions. In anomaly detection, normal behaviour of the network is modelled and an alarm is raised if any behaviour of the network does not match with the modelled normal behaviour. For example, a profile of a user over the network may contain an averaged frequency of some system commands during his or her logging session. If the frequency of those system commands significantly varies during a logging session of the user that is being monitored, an anomaly alarm will raise.

Anomaly detection is an effective technique for detecting unknown intrusions since it does not require any knowledge about intrusions. But the major drawback of this detection technique is high false alarm rate. The high false alarm rate is because irrespective to the type of event, i.e. normal or abnormal occurred in the network, if the frequency of the detected event is different from averaged frequency associated to the user profile that is being monitored it will raise an alert. The specific reasons for the high false alarm rate are bad packets generated by software bugs, corrupt data packets and so on. Due to the high false alarm rate, real intrusions are often missed or ignored.

In the light of the foregoing discussion, it is evident that there is a need for an improved method and system intrusion detection over various networks.

It is therefore an objective of the present invention is to provide an efficient intrusion detection method and system for networks with less false alarm rate.

The objective is achieved by providing a method for detecting network intrusion according to claims 1, and a system for detecting network intrusion according to claim 14. Further embodiments of the present invention are addressed in the dependent claims.

In a first aspect of the present invention, a method for detecting network intrusion by using a plurality of neural networks is disclosed. In accordance to the method, initially a dataset is received as an input and then a first plurality of weight values corresponding to a plurality of vectors of the input data at a first neural network of the plurality of neural networks are determined. The first plurality of weight values are then received and updated to a second plurality of weight values by a second neural network of the plurality of neural networks. Then the second plurality of weight values are updated to a third plurality of weight values at a third neural network of the plurality of neural networks. At the final step of the method, the plurality of vectors are classified under at least one of a plurality of intrusions based on the third plurality of weight values.

In accordance with the first aspect of the present invention, the plurality of neural networks are trained to detect network intrusion by using a training data.

In accordance with the first aspect of the present invention, a classification map of the first neural network is formed using the training data.

In accordance with the first aspect of the present invention, the plurality of vectors are mapped on the classification map of the first neural network.

In accordance with the first aspect of the present invention, the first plurality of weight values are associated with the classification map of the first neural network.

In accordance with the first aspect of the present invention, the plurality of intrusions are defined based on the training data.

In accordance with the first aspect of the present invention, the second plurality of weight values are determined from the first plurality of weight values and the plurality of vectors at the second neural network before updating the first plurality of weight values to the second plurality of weight values.

In accordance with the first aspect of the present invention, the third plurality of weight values are determined from the second plurality of weight values and the plurality of vectors at the third neural network before updating the second plurality of weight values to the third plurality of weight values.

In a second aspect of the present invention, a method for identifying an intrusion detection feature from a plurality of features for a data set is disclosed. In accordance to the method, initially one or more values of a feature of the plurality of features for the data set are determined. Then the data set is being divided in one or more data subsets based on the one or more values of the feature. At the next method step, entropy of the feature is determined from the one or more values and a predefined class of the feature for the one or more data subsets. The entropy of the feature is used for determining an information gain for the feature at the next method step. Then at the final step of the method disclosed the information gain of the feature is compared with a predefined value of the information gain.

In accordance with the second aspect of the present invention, the predefined class is determined for the feature of the plurality of the features.

In a third aspect of the present invention, a network intrusion detection system by using a plurality of neural networks is disclosed. The system comprises a first neural network for determining a first plurality of weight values corresponding to a plurality of vectors of an input data. The system also includes a second neural network for updating the first plurality of weight values received from the first neural network to a second plurality of weight values based on the plurality of vectors of the input data. The system disclosed in the present invention also has a third neural network for updating the second plurality of weight values received from the second neural network to a third plurality of weight values based on the plurality of vectors of the input data. The last operational block of the disclosed system is a classification module for classifying the plurality of vectors under at least one of a plurality of intrusions based on the third plurality of weight values received from the third neural network.

In accordance to the third aspect of the present invention, the system also comprises a feature detector for identifying at least one intrusion detection feature from a plurality of features of the input data.

The present invention is further described hereinafter with reference to illustrated embodiments shown in the accompanying drawings, in which:

FIG 1    illustrates a block diagram of a feature based three stage neural network intrusion detection system in accordance with an embodiment of the present invention, and

FIG 2    illustrates a flow chart for a three stage neural network intrusion detection method in accordance with an embodiment of the present invention.

Various embodiments are described with reference to the drawings, wherein like reference numerals are used to refer to like elements throughout. In the following description, for purpose of explanation, numerous specific details are set forth in order to provide a thorough understanding of one or more embodiments. It may be evident that such embodiments may be practiced without these specific details.

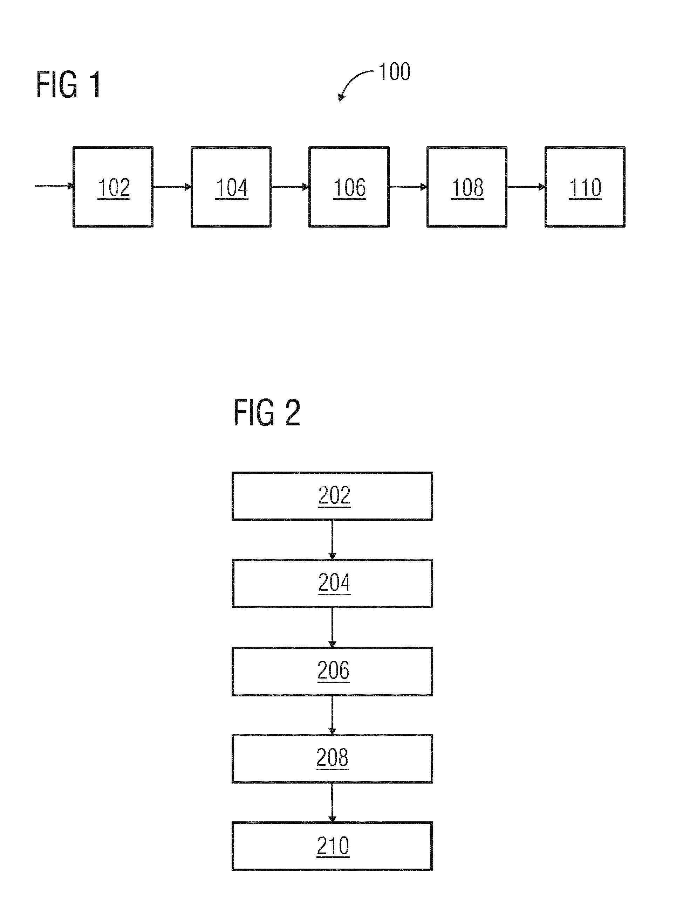

FIG 1 illustrates a block diagram of a feature based three stage neural network intrusion detection system 100 in accordance with an embodiment of the present invention.

As shown in FIG 1, the network intrusion detection system 100 includes a feature detector 102, a self organizing feature maps (SOFM) neural network 104, a multilayered feed forward (MLFF) neural network 106, an Elman back propagation (ELBP) neural network 108 and a classification module 110. The feature detector 102 receives an input data. The input data contains all the data features and a class associated with each data feature. The class of the data feature could be continuous, discrete or symbolic. The feature detector 102 detects the relevant features for intrusion detection from the available data features.

The feature detector 102 checks all data features one by one to identify the features relevant to intrusion detection. During the process for checking the relevancy for intrusion detection of a feature from the data features, the feature detector 102 determines all the values of the feature under check for all values of the input data. For example, assuming feature F is a feature for input data S and feature F is needed to be checked for relevancy to intrusion detection. The feature detector 102 identifies the values of F for each value of the input data S. The values of F identified by the feature detector 102 are {f1,f2,f3,...,fv}. Based on the identified values of F, i.e. {f1,f2,f3,...,fv}, the input data set S is being divided in subsets like {S1,S2,S3,...,Sv}, where Sj is the subset of input data S for which the value of feature F is fj. Also let Sj contain sij samples of class i. The feature detector 102 calculates an entropy E of the feature F by using the following formula:

$$E(F) = \sum_{j=1}^{v} \frac{s_{1j} + s_{2j} + \cdots + s_{mj}}{s} \times I(s_{1j} + s_{2j} + \cdots + s_{mj})$$

Based on the entropy E of a feature, the information gain measures the relevancy to intrusion detection for a given feature. For the above mentioned example of feature F, an information gain G is being calculated from entropy E of the feature F as follows:

$$G(F) = 1(s_1, s_2, \ldots, s_m) - E(F)$$

The value of the information gain G for each feature of the input data is being calculated and compared with a predefined value of the information gain. In a preferred embodiment the predefined value of the information gain is 1. For the above mentioned example, if G(F) is approximately equal to 1, i.e. equal to the predefined value of information gain, then the feature F is relevant for intrusion detection. In other words, if the value of entropy E(F) is approximately equal to 0, i.e. a predefined value of feature entropy E, than the feature F will be considered relevant for intrusion detection.

For simulation purposes, a KDD 99 dataset is used as input data for the feature detector 102. The KDD 99 dataset is an intrusion detection dataset based on DARPA initiative, which provides intrusion detection system (IDS) designers a benchmark to evaluate different methodology of intrusion detection. The KDD 99 dataset is used as input data to evaluate the intrusion detection approach described in the present invention. The KDD 99 dataset has 41 features. The feature detector 102 identified 30 features relevant to intrusion detection out of the available 41 features of the KDD 99 dataset. The feature detector 102 identified 30 relevant features by using the methodology recited above.

Three neural networks shown in FIG 1, namely the SOFM neural network 104, the MLFF neural network 106 and the ELBP neural network 108 are connected in series. The three neural networks 104, 106 and 108 are trained neural networks. The three neural networks 104, 106 and 108 are trained using the KDD 99 dataset. The first neural network 104, i.e. the SOFM neural network 104, receives the input data from the feature detector 102. The SOFM neural network 104 does not receive all the features of the input data but it only receives the features of the input data which has been identified as relevant to intrusion detection by the feature detector 102. The SOFM neural network 104 is an unsupervised learning neural network, i.e. the network gets trained on unlabelled data and tries to form clusters based on some rules and then labels the input data. The SOFM neural network 104 is primarily used for classifying unknown records to various classes. As recited above, the SOFM neural network 104 is trained using the KDD 99 dataset. During training process, the SOFM neural network 104 receives the KDD 99 data set from the feature detector 102. The KDD 99 dataset received by the SOFM neural network 104 has 30 features which are most relevant for intrusion detection instead of original 41 features. The SOFM neural network 104 builds a classification map using a competitive process as known in the art by using the KDD 99 dataset received from the feature detector 102 during the training process. It is desirable to provide a large number of input vectors, i.e. the input dataset as much as possible during the training process so that the SOFM neural network 104 can build an exhaustive classification map. Once the training process is completed, the trained SOFM neural network 104 is used for mapping the input vectors of the dataset having only the features relevant for intrusion detection received from the feature detector 102 to the classification map that is being built during the training process. The input vectors for the SOFM neural network 104 are automatically categorized by identifying a neuron on the classification map having weight value closest to an input vector. This can be determined by calculating Euclidean distance between the input vector and the weight value as known in the art. In a preferred embodiment of the present invention, the first neural network i.e. the SOFM neural network 104 shown in FIG 1 can be replaced with any other neural network known in the state of art.

The weight values corresponding to each input vector of the input data are fed to the MLFF neural network 106 along with the input vectors by SOFM neural network 104 as shown in FIG 1. The MLFF neural network 106 is based on supervised learning and use back propagation algorithm to capture the non-liner relationships between the records in order to classify the input data to an appropriate class. The MLFF neural network 106 is trained using back algorithm. The MLFF neural network 106 can be modified for performing some specific tasks by choosing the number of input neurons, output neurons, hidden neurons and interconnection of the neurons. The number of hidden neurons is directly related to the capabilities of the MLFF neural network 106. Hence it is highly desirable for the best performance of the MLFF neural network 106, an optimal number of hidden neurons must be determined by using trial and error method as known in the art. As mentioned above, the back propagation algorithm is used to train the MLFF neural network 106 hence the MLFF neural network 106 propagates the weight values received from the SOFM neural network 104 from the output neurons of the MLFF neural network 106 to the hidden neurons of the MLFF neural network 106, which in turns updates the weight values received from the SOFM neural network 104. In a preferred embodiment of the present invention, the second neural network i.e. the MLFF neural network 106 shown in FIG 1 can be replaced with any other neural network known in the state of art.

The MLFF neural network 106 fed the updated weight values to the ELBP neural network 108 as shown in FIG 1. The ELBP neural network 108 is a fully recurrent network based on supervised learning. In the ELBP neural network 108 as known in state of the art, every neuron receives inputs from every other neuron in the network. Usually only a subset of the neurons receive external inputs in addition to the inputs from all the other neurons, and another disjoint subset of neurons report their output externally as well as sending it to all the neurons. The ELBP neural network 108 is also a kind of recurrent neural network similar to the MLFF neural network 106 and it further updates the received updated weight values from the MLFF neural network 106. In a preferred embodiment of the present invention, the third neural network i.e. the ELBP neural network 108 shown in FIG 1 can be replaced with any other neural network known in the state of art.

The updated weight values fed to the classification module 110 by the ELBP neural network 108 in the form of a weight matrix as shown in FIG 1. The classification module 110 classifies the vectors of the input data under predefined types of intrusions based on the received weight matrix. The predefined types of intrusions include the definition of all possible types of intrusions that the network intrusion detection system 100 is capable of detecting. In an exemplary embodiment of the present invention, the classification module 110 is capable of classifying a test sample of KDD 99 dataset under five intrusions category namely: 1. Normal, when no intrusion is detect; 2. Denial of service (DoS) intrusion, when an intruder makes a computing or memory resource too busy or too full to handle legitimate requests; 3. Probe intrusion, when an intruder scans a network to gather information; 4. User to root (U2R) intrusion, when an intruder gains access of a normal user account on the system; 5. Remote to user (R2L) intrusion, when an intruder sends packets to a machine over a network. However the types of intrusions are not limited to the five types mentioned above, the classification module 110 may have any number of intrusions types.

FIG 2 illustrates a flow chart for a three stage neural network intrusion detection method in accordance with an embodiment of the present invention.

At step 202, all data features of the input data are being checked one by one to identify the features relevant to intrusion detection by the feature detector 102 as explained in FIG 1. The preferred and alternate methods for checking the relevancy of a data feature for intrusion detection are also explained in FIG 1.

At step 204 of the flow chat shown in FIG 2 the first neural network i.e. the SOFM neural network 104 shown in FIG 1 will receive the input vectors of the input data and only the features of the input data that are identified as relevant to intrusion detection at step 202. The SOFM neural network 104 assigns the weight value to each input vector of the input data as described in FIG 1. The preferred and alternate methods for assigning weight values of the input vectors are also explained in FIG 1.

At step 206 of the flow chart shown in FIG 2, the second neural network i.e. the MLFF neural network 106 shown in FIG 1 receives the weight values associated with the input vectors of the input data determined at step 204. The MLFF neural network 106 updates the weight value to each input vector of the input data as described in FIG 1. The preferred and alternate methods for updating the weight values of the input vectors are also explained in FIG 1.

At step 208 of the flow chart shown in FIG 2, the third neural network i.e. the ELBP neural network 108 of FIG 1 receives the updated weight values from the MLFF neural network 106 determined at step 206. The ELBP neural network 108 further updates the received weight value as described in FIG 1. The preferred and alternate methods for further updating the weight values of the input vectors by the ELBP neural network 108 are also explained in FIG 1.

At the final step of flow chart shown in FIG 2 i.e. at step 210, the updated weight values determined at step 208 are received by the classification module 110 as shown in FIG 1. The updated weight values are fed to the classification module 110 in form of the weight matrix by the ELBP neural network 108 as described in FIG 1. The classification module 110 classifies the vectors of the input data under predefined types of intrusions based on the received weight matrix as recited in the description of FIG 1. The preferred and alternate methods for classifying the vectors of the input data under predefined types of intrusions are also explained in FIG 1.

As it will be evident from the foregoing description, the present invention provides a method and a system for feature based three stage neural networks intrusion detection.

The method and system for detecting network intrusion disclosed in the present invention uses three stage neural network for intrusion detection. Due to self-learning nature of the neural networks the efficiency of the system for detecting network intrusion will keep on increasing with time which leads to less false alarm rate.

In addition to this, the method and system for detecting network intrusion disclosed in the present invention also capable of identifying the features of the input dataset which are relevant for intrusion detection. Due to this property of the intrusion detection system disclosed in the invention only need to process the relevant features of the input dataset instead of all the features, which in turns reduce the load on the system that makes the disclosed intrusion detection system faster and efficient in comparison to intrusion detection systems mentioned in state of the art.

While the present invention has been described in detail with reference to certain embodiments, it should be appreciated that the present invention is not limited to those embodiments. In view of the present disclosure, many modifications and variations would present themselves, to those of skill in the art without departing from the scope of various embodiments of the present invention, as described herein. The scope of the present invention is, therefore, indicated by the following claims rather than by the foregoing description. All changes, modifications, and variations coming within the meaning and range of equivalency of the claims are to be considered within their scope.

**Claims**

1. A method for detecting network intrusion using a plurality of neural networks, the method comprising:

    - determining a first plurality of weight values corresponding to a plurality of vectors of an input data at a first neural network (104) of the plurality of neural networks;
    - updating the first plurality of weight values to a second plurality of weight values at a second neural network (106) of the plurality of neural networks;
    - updating the second plurality of weight values to a third plurality of weight values at a third neural network (108) of the plurality of neural networks; and
    - classifying the plurality of vectors under at least one of a plurality of intrusions based on the third plurality of weight values.

2. The method according to claim 1, further comprises a step of training the plurality of neural networks to detect network intrusion by using a training data.

3. The method according to claim 2, further comprises forming a classification map of the first neural network using the training data.

4. The method according to claim 3, further comprises a step of mapping the plurality of vectors on the classification map of the first neural network (104).

5. The method according to claim 4, wherein the first plurality of weight values is associated with the classification map of the first neural network (104).

6. The method according to claim 2, further comprises a step of defining the plurality of intrusions based on the training data.

7. The method according to any preceding claims, wherein determining the first plurality of weight values corresponding to the plurality of vectors at the first neural network (104) further comprises a step of inputting the first plurality of weight values and the plurality of vectors to the second neural network (106).

8. The method according to any preceding claims further comprises a step of determining the second plurality of weight values from the first plurality of weight values and the plurality of vectors at the second neural network (106) before updating the first plurality of weight values to the second plurality of weight values.

9. The method according to any preceding claims, wherein updating the first plurality of weight values to the second plurality of weight values at the second neural network (106) further comprises a step of inputting the second plurality of weight values and the plurality of vectors to the third neural network (108).

10. The method according to any preceding claims further comprises a step of determining the third plurality of weight values from the second plurality of weight values and the plurality of vectors at the third neural network (108) before updating the second plurality of weight values to the third plurality of weight values.

11. A method for identifying an intrusion detection feature from a plurality of features for a data set, the method comprising:

    - determining one or more values of a feature of the plurality of features for the data set;
    - dividing the data set in one or more data subsets based on the one or more values of the feature;

- determining an entropy of the feature from the one or more values and a predefined class of the feature for the one or more data subsets;
- determining an information gain for the first feature from the entropy of the first feature; and
- comparing the information gain of the first feature with a predefined value of the information gain.

12. The method according to claim 11 further comprising a step of identifying the predefined class for the feature of the plurality of the features.

13. The method according to claim 11, wherein comparing the information gain of the first feature with a predefined value of the information gain further comprises a step of comparing the entropy of the feature with a predefined value of the entropy.

14. A network intrusion detection system (100) using a plurality of neural networks, the system comprising:

- a first neural network (104) for determining a first plurality of weight values corresponding to a plurality of vectors of an input data;
- a second neural network (106) for updating the first plurality of weight values received from the first neural network (104) to a second plurality of weight values based on the plurality of vectors of the input data;
- a third neural network (108) for updating the second plurality of weight values received from the second neural network (106) to a third plurality of weight values based on the plurality of vectors of the input data; and
- a classification module (110) for classifying the plurality of vectors under at least one of a plurality of intrusions based on the third plurality of weight values received from the third neural network (108).

15. The system according to claim 15 further comprising a feature detector (102) for identifying at least one intrusion detection feature from a plurality of features of the input data.

FIG 1

100

```
→  ┌─────┐   ┌─────┐   ┌─────┐   ┌─────┐   ┌─────┐
   │ 102 │ → │ 104 │ → │ 106 │ → │ 108 │ → │ 110 │
   └─────┘   └─────┘   └─────┘   └─────┘   └─────┘
```

FIG 2

```
        ┌───────────┐
        │    202    │
        └───────────┘
              │
              ▼
        ┌───────────┐
        │    204    │
        └───────────┘
              │
              ▼
        ┌───────────┐
        │    206    │
        └───────────┘
              │
              ▼
        ┌───────────┐
        │    208    │
        └───────────┘
              │
              ▼
        ┌───────────┐
        │    210    │
        └───────────┘
```

Europäisches
Patentamt

European
Patent Office

Office européen
des brevets

## EUROPEAN SEARCH REPORT

Application Number

EP 13 17 8653

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | ZHANG C ET AL: "Intrusion detection using hierarchical neural networks", PATTERN RECOGNITION LETTERS, ELSEVIER, AMSTERDAM, NL, vol. 26, no. 6, 1 May 2005 (2005-05-01), pages 779-791, XP025292270, ISSN: 0167-8655, DOI: 10.1016/J.PATREC.2004.09.045 [retrieved on 2005-05-01] * SECTIONS 1. Introduction; 2. Algorithms in neural networks; 3. and 3.1. Serial hierarchical IDS (SHIDS); 4.3.1. Serial hierarchical IDS * | 1-10,14, 15 | INV. H04L29/06 |
| A | US 2005/060295 A1 (GOULD STEPHEN [AU] ET AL) 17 March 2005 (2005-03-17) * paragraph [0003] * * paragraph [0021] - paragraph [0022] * * paragraph [0055] - paragraph [0062] * | 1-10,14, 15 | |
| A | US 2008/262991 A1 (KAPOOR HARSH [US] ET AL) 23 October 2008 (2008-10-23) * paragraph [0167] - paragraph [0168] * * paragraph [0172] - paragraph [0173] * * paragraph [0174] * * paragraph [0430] * * paragraph [0430] - paragraph [0433] * * paragraph [0434] - paragraph [0437] * * paragraph [0443] * | 1-10,14, 15 | TECHNICAL FIELDS SEARCHED (IPC) H04L |
| A | WO 2012/028375 A2 (TELEFONICA SA [ES]; AMAYA CALVO ANTONIO MANUEL [ES]; PEREZ IGLESIAS SA) 8 March 2012 (2012-03-08) * page 17, line 7 - page 20, line 9 * | 1-10,14, 15 | |

-/--

~~The present search report has been drawn up for all claims~~

| Place of search | Date of completion of the search | Examiner |
|---|---|---|
| Munich | 13 January 2014 | Buhleier, Rainer |

EPO FORM 1503 03.82 (P04C01)

Europäisches
Patentamt

European
Patent Office

Office européen
des brevets

## EUROPEAN SEARCH REPORT

Application Number

EP 13 17 8653

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | WO 2008/135822 A2 (ERICSSON TELEFON AB L M [SE]; MAEENPAEAE JOUNI [FI]) 13 November 2008 (2008-11-13) * page 4, line 29 - page 9, line 21 * ----- | 1-10,14, 15 | |
| A | TEVFIK KIZILOREN ET AL: "Anomaly Detection with Self-Organizing Maps and Effects of Principal Component Analysis on Feature Vectors", NATURAL COMPUTATION, 2009. ICNC '09. FIFTH INTERNATIONAL CONFERENCE ON, IEEE, PISCATAWAY, NJ, USA, 14 August 2009 (2009-08-14), pages 509-513, XP031588381, ISBN: 978-0-7695-3736-8 * the whole document * ----- | 1-10,14, 15 | |

TECHNICAL FIELDS
SEARCHED      (IPC)

~~The present search report has been drawn up for all claims~~

| Place of search | Date of completion of the search | Examiner |
|---|---|---|
| Munich | 13 January 2014 | Buhleier, Rainer |

Europäisches
Patentamt

European
Patent Office

Office européen
des brevets

**Application Number**

EP 13 17 8653

---

## CLAIMS INCURRING FEES

The present European patent application comprised at the time of filing claims for which payment was due.

☐ Only part of the claims have been paid within the prescribed time limit. The present European search report has been drawn up for those claims for which no payment was due and for those claims for which claims fees have been paid, namely claim(s):

☐ No claims fees have been paid within the prescribed time limit. The present European search report has been drawn up for those claims for which no payment was due.

---

## LACK OF UNITY OF INVENTION

The Search Division considers that the present European patent application does not comply with the requirements of unity of invention and relates to several inventions or groups of inventions, namely:

see sheet B

☐ All further search fees have been paid within the fixed time limit. The present European search report has been drawn up for all claims.

☐ As all searchable claims could be searched without effort justifying an additional fee, the Search Division did not invite payment of any additional fee.

☐ Only part of the further search fees have been paid within the fixed time limit. The present European search report has been drawn up for those parts of the European patent application which relate to the inventions in respect of which search fees have been paid, namely claims:

☒ None of the further search fees have been paid within the fixed time limit. The present European search report has been drawn up for those parts of the European patent application which relate to the invention first mentioned in the claims, namely claims:

1-10, 14, 15

☐ The present supplementary European search report has been drawn up for those parts of the European patent application which relate to the invention first mentioned in the claims (Rule 164 (1) EPC).

Europäisches
Patentamt

European
Patent Office

Office européen
des brevets

**LACK OF UNITY OF INVENTION
SHEET B**

Application Number

EP 13 17 8653

The Search Division considers that the present European patent application does not comply with the requirements of unity of invention and relates to several inventions or groups of inventions, namely:

1. claims: 1-10, 14, 15

   A method and system for detecting network intrusion using neural networks
   ---

2. claims: 11-13

   A method for identifying intrusion detection features based on entropy
   ---

## ANNEX TO THE EUROPEAN SEARCH REPORT
## ON EUROPEAN PATENT APPLICATION NO.

EP 13 17 8653

This annex lists the patent family members relating to the patent documents cited in the above-mentioned European search report.
The members are as contained in the European Patent Office EDP file on
The European Patent Office is in no way liable for these particulars which are merely given for the purpose of information.

13-01-2014

| Patent document cited in search report | | Publication date | Patent family member(s) | | Publication date |
|---|---|---|---|---|---|
| US 2005060295 | A1 | 17-03-2005 | NONE | | |
| US 2008262991 | A1 | 23-10-2008 | NONE | | |
| WO 2012028375 | A2 | 08-03-2012 | EP<br>ES<br>US<br>WO | 2612481 A2<br>2393501 A1<br>2013269033 A1<br>2012028375 A2 | 10-07-2013<br>21-12-2012<br>10-10-2013<br>08-03-2012 |
| WO 2008135822 | A2 | 13-11-2008 | NONE | | |

EPO FORM P0459

For more details about this annex : see Official Journal of the European Patent Office, No. 12/82